# EUROPÄISCHE PATENTSCHRIFT

(11) **EP 2 653 770 B1**
(45) Veröffentlichungstag und Bekanntmachung des Hinweises auf die Patenterteilung: **25.07.2018**
(21) Anmeldenummer: 12164969.3
(22) Anmeldetag: 20.04.2012
(51) Int. Cl.: F16L 9/18, F16L 37/56, F28D 7/10, F16L 53/32

(54) **Verbinder, insbesondere Schnellverbinder**
Connector, in particular quick connector
Connecteur, en particulier connecteur rapide

(43) Veröffentlichungstag der Anmeldung: 23.10.2013
(73) Patentinhaber: TI Automotive (Heidelberg) GmbH, 69123 Heidelberg (DE)
(72) Erfinder: Barthel, Iris, 34270 Schauenburg (DE); Jensen, Hans, 73265 Dettingen unter Teck (DE); Bol, Alexander, 34225 Baunatal Guntershausen (DE)
(74) Vertreter: Rohmann, Michael

(56) Entgegenhaltungen:
- EP-A2- 1 790 931
- DE-A1- 3 815 608
- DE-U1-202007 015 036
- GB-A- 2 290 848

## Beschreibung

Die Erfindung betrifft einen Verbinder, insbesondere einen Schnellverbinder für die Verbindung zumindest einer, ein zu temperierendes fluides Medium, insbesondere eine zu temperierende Harnstofflösung führenden Rohrleitung. Mit dem Verbinder kann die Rohrleitung an eine weitere Rohrleitung angeschlossen werden oder an eine andere Komponente, beispielsweise an einen Tank für ein fluides Medium oder dergleichen. Der erfindungsgemäße Verbinder bzw. Schnellverbinder ist nach besonders bevorzugter Ausführungsform für eine lösbare Verbindung mit einer weiteren Komponente bzw. Rohrleitung ausgelegt. - Mit dem Begriff zu temperierendes fluides Medium ist insbesondere ein zu temperierendes flüssiges Medium gemeint.

Verbinder bzw. Schnellverbinder der eingangs genannten Art sind aus der Praxis in verschiedenen Ausführungsformen bekannt. GB 2 290 848 A offenbart eine Rohrleitung mit mehreren Leitungskanälen für den Transport fluider Medien, die als Verbinder angesehen werden kann. Es ist auch bereits bekannt, eine zu temperierende Harnstofflösung im Rahmen eines SCR-Systems durch einen solchen Verbinder bzw. Schnellverbinder zu leiten. In Kraftfahrzeugen, insbesondere in Fahrzeugen mit Dieselmotor, ist in der Regel ein SCR-System mit einem SCR-Katalysator für die Abgasbehandlung vorhanden (SCR: Selective Catalytic Reduction). Für eine wirksame Reduzierung der im Abgas eines Kraftfahrzeuges enthaltenen Stickoxide wird dem Abgas vor einem SCR-Katalysator eine Harnstofflösung zudosiert. Eine solche Harnstofflösung bzw. wässrige Harnstofflösung hat den Nachteil, dass Harnstoff bei Temperaturen unter -11 °C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Rohrleitungen für die Harnstofflösung beheizt. Es ist auch bereits bekannt, einen an eine solche Rohrleitung angeschlossenen Verbinder bzw. Schnellverbinder zu beheizen. Dabei wird die Beheizung als elektrische Beheizung durchgeführt und zu diesem Zweck werden ein oder mehrere Heizdrähte an dem Verbinder bzw. Schnellverbinder angeordnet. Grundsätzlich ist es auch bereits bekannt, eine Beheizung von fluidführenden Systemen mit Hilfe von erwärmten flüssigen Medien durchzuführen. Die meisten bekannten Maßnahmen haben den Nachteil, dass sie nur aufwendig bzw. kostenaufwendig realisierbar sind und/oder eine ausreichend effektive Temperierung bzw. Erwärmung des zu temperierenden fluiden Mediums bzw. der zu temperierenden Harnstofflösung nicht gewährleistet ist.

Demgegenüber liegt der Erfindung das technische Problem zugrunde, einen Verbinder und insbesondere einen Schnellverbinder der eingangs genannten Art anzugeben, der auf einfache und wenig aufwendige Weise herstellbar ist und mit dem zugleich eine sehr effektive Temperierung eines fluiden Mediums bzw. einer Harnstofflösung möglich ist.

Zur Lösung dieses technischen Problems lehrt die Erfindung einen Verbinder, insbesondere einen Schnellverbinder für die Verbindung zumindest einer, ein zu temperierendes fluides Medium, insbesondere eine zu temperierende Harnstofflösung führenden Rohrleitung, nach dem Anspruch 1. Nach einer Ausführungsform der Erfindung wird der erfindungsgemäße Verbinder bzw. Schnellverbinder mit einer Rohrleitung bzw. mit einer weiteren Rohrleitung verbunden und dient dann zweckmäßigerweise zur Verbindung von zwei Rohrleitungen oder von zumindest zwei Rohrleitungen. Es liegt im Rahmen der Erfindung, dass der erfindungsgemäße Verbinder bzw. Schnellverbinder mit einem weiteren Verbinder verbunden wird. Ein Steckerelement eines erfindungsgemäßen Verbinders kann dann in ein Muffenelement des weiteren Verbinders eingesteckt werden oder umgekehrt. Der erfindungsgemäße Verbinder kann auch zum Anschluss einer Rohrleitung an eine andere Komponente, beispielsweise an einen Tank oder an eine Einspritzdüse oder dergleichen eingesetzt werden. Soweit hier und nachfolgend von Verbinder die Rede ist, ist vorzugsweise ein Schnellverbinder gemeint, der insbesondere für eine lösbare Verbindung mit einer weiteren Komponente eingesetzt werden kann.

Bei dem zu temperierenden fluiden Medium handelt es sich bevorzugt um ein zu temperierendes flüssiges Medium und zwar insbesondere um ein zu erwärmendes flüssiges Medium. Es liegt im Rahmen der Erfindung, dass es sich bei dem zu temperierenden fluiden Medium um eine Harnstofflösung bzw. um eine wässrige Harnstofflösung handelt. Zweckmäßigerweise ist ein erfindungsgemäßer Verbinder für die Durchleitung der zu temperierenden bzw. zu erwärmenden Harnstofflösung Bestandteil eines SCR-Systems in einem Kraftfahrzeug.

Das fluide Temperiermedium dient zur Temperierung bzw. zur Erwärmung des zu temperierenden fluiden Mediums. Es liegt im Rahmen der Erfindung, dass es sich bei dem fluiden Temperiermedium um ein erwärmtes flüssiges Temperiermedium handelt. - Eine empfohlene Ausführungsform der Erfindung zeichnet sich dadurch aus, dass in dem Innenrohr das zu temperierende fluide Medium aufgenommen ist bzw. strömt und dass in dem zumindest einen Leitungskanal zwischen Innenrohr und Außenrohr das fluide Temperiermedium aufgenommen ist bzw. strömt. Die Innenwand des Außenrohres ist über eine Mehrzahl von Stegen mit der Außenwand des Innenrohres verbunden. Bevorzugt erstrecken sich die Stege parallel zur Längsmittelachse M des Innenrohres. Die Stege sind an die Innenwand des Außenrohres und an die Außenwand des Innenrohres einstückig angeformt. Die Stege verlaufen über die Länge des Aggregates aus Innenrohr und Außenrohr. Durch die Stege wird der Raum zwischen Innenrohr und Außenrohr in eine Mehrzahl von Leitungskanälen unterteilt. Zweckmäßigerweise sind die Stege gleichmäßig über den Umfang des Innenrohres bzw. über den Umfang des Außenrohres verteilt angeordnet. Es liegt im Rahmen der Erfindung, dass die Stege parallel zueinander entlang der Rohrleitung verlaufen. Vorzugsweise ist der Querschnitt der vom Innenrohr, vom Außenrohr und den Stegen begrenzten Leitungskanäle gleich groß bzw. im Wesentlichen gleich groß. Es empfiehlt sich, dass alle Leitungskanäle die gleiche Querschnittsform bzw. im Wesentlichen die gleiche Querschnittsform aufweisen. Zweckmäßigerweise ist die Innenwand des Außenrohres mit der Außenwand des Innenrohres über zumindest zwei Stege und bevorzugt über zumindest drei Stege verbunden. - Vorzugsweise bestehen die Stege aus thermoplastischem Kunststoff bzw. im Wesentlichen aus thermoplastischem Kunststoff. Es liegt im Rahmen der Erfindung, dass das Aggregat aus Innenrohr, Außenrohr und Stegen durch Spritzgießen hergestellt wird bzw. als Spritzgussteil hergestellt wird. Ein äußeres Rohr ist vorgesehen. Eine bevorzugte Ausführungsform des Verbinders ist dadurch gekennzeichnet, dass das Aggregat aus Innenrohr und Außenrohr in dem äußeren Rohr angeordnet ist bzw. von dem äußeren Rohr umgeben wird, insbesondere über den gesamten Umfang des Aggregates umgeben wird und dass sich das äußere Rohr parallel bzw. im Wesentlichen parallel zur Längsmittelachse M des Innenrohres erstreckt. Es liegt im Rahmen der Erfindung, dass zwischen dem Außenrohr und dem äußeren Rohr zumindest ein Außenleitungskanal angeordnet ist, der bevorzugt von dem fluiden Temperiermedium durchströmt wird. - Es empfiehlt sich, dass das gesamte Aggregat aus äußerem Rohr, Außenrohr und Innenrohr sowie gegebenenfalls mit den Stegen durch Spritzgießen hergestellt wird bzw. als Spritzgussteil hergestellt wird. Es liegt fernerhin im Rahmen der Erfindung, dass dieses gesamte Aggregat aus einem thermoplastischen Kunststoff bzw. im Wesentlichen aus einem thermoplastischen Kunststoff besteht.

Eine bevorzugte Ausführungsform der Erfindung zeichnet sich dadurch aus, dass in dem Innenrohr das zu temperierende fluide Medium aufgenommen ist bzw. strömt, dass in dem zumindest einen Leitungskanal zwischen Innenrohr und Außenrohr das fluide Temperiermedium aufgenommen ist bzw. strömt und dass in dem zumindest einen Außenleitungskanal zwischen Außenrohr und äußerem Rohr ebenfalls das fluide Temperiermedium aufgenommen ist bzw. strömt. - Eine andere Ausführungsform der Erfindung ist dadurch gekennzeichnet, dass in dem Innenrohr das fluide Temperiermedium aufgenommen ist bzw. strömt, dass in dem zumindest einem Leitungskanal zwischen Innenrohr und Außenrohr das zu temperierende fluide Medium aufgenommen ist bzw. strömt und dass in dem zumindest einen Außenleitungskanal zwischen Außenrohr und äußerem Rohr das fluide Temperiermedium aufgenommen ist bzw. strömt. Die Innenwand des äußeren Rohres ist über eine Mehrzahl von Außenstegen mit der Außenwand des Außenrohres verbunden. Die Außenstege erstrecken sich bevorzugt parallel zur Längsmittelachse M des Innenrohres. Es liegt im Rahmen der Erfindung, dass sich die Außenstege in Längsrichtung des Verbinders erstrecken. Es liegt fernerhin im Rahmen der Erfindung, dass die Außenstege an die Innenwand des äußeren Rohres und an die Außenwand des Außenrohres einstückig angeformt sind. Zweckmäßigerweise verlaufen die Außenstege über die Länge des äußeren Rohres bzw. über die Länge des Außenrohres ohne Unterbrechung bzw. ohne Lücken. Es liegt im Rahmen der Erfindung, dass die Außenstege den Raum zwischen dem Außenrohr und dem äußeren Rohr in eine Mehrzahl von Außenleitungskanälen unterteilen, wobei die Außenleitungskanäle vorzugsweise von dem fluiden Temperiermedium durchströmt werden. Es empfiehlt sich, dass die Außenstege gleichmäßig über den Umfang des äußeren Rohres bzw. über den Umfang des Außenrohres verteilt angeordnet sind. Vorteilhafterweise haben die durch die Außenstege getrennten Außenleitungskanäle einen gleichgroßen Querschnitt bzw. einen im Wesentlichen gleich großen Querschnitt und bevorzugt die gleiche Querschnittsform. Zweckmäßigerweise ist die Innenwand des äußeren Rohres über zumindest zwei Außenstege, vorzugsweise zumindest drei Außenstege und bevorzugt zumindest vier Außenstege mit der Außenwand des Außenrohres verbunden. - Es liegt im Rahmen der Erfindung, dass die Außenstege aus thermoplastischem Kunststoff bestehen bzw. im Wesentlichen aus thermoplastischem Kunststoff bestehen. Vorzugsweise wird das gesamte Aggregat aus äußerem Rohr, Außenrohr, Innenrohr und Außenstegen so wie gegebenenfalls Stegen durch Spritzgießen hergestellt bzw. als Spritzgussteil hergestellt. Die Stege und/oder die Außenstege weisen einen trapezförmigen Querschnitt auf. Dabei verjüngen sich die Trapeze empfohlenermaßen zur Mitte des Verbinders hin. Mitte des Verbinders meint hier insbesondere die Längsmittelachse M des Innenrohres. In vorteilhafter Ausgestaltung der Erfindung ist vorgesehen, dass die Stege in Bezug auf den Umfang des Außenrohres versetzt zu den Außenstegen angeordnet sind. Zweckmäßigerweise ist ein Steg in Bezug auf den Umfang des Außenrohres in der Mitte oder etwa in der Mitte zwischen zwei Außenstegen angeordnet.

Nach einer empfohlenen Ausführungsform der Erfindung beträgt die Wandstärke des Innenrohres und/oder die Wandstärke des Außenrohres und/oder die Wandstärke des äußeren Rohres 0,6 bis 3 mm, vorzugsweise 0,8 bis 2,5 mm, bevorzugt 0,9 bis 2,2 mm und besonders bevorzugt 1 bis 2 mm. - Es liegt im Rahmen der Erfindung, dass das Innenrohr und/oder das Außenrohr und/oder das äußere Rohr zylinderförmig bzw. im Wesentlichen zylinderförmig ausgebildet ist/sind. Es liegt weiterhin im Rahmen der Erfindung, dass das Innenrohr konzentrisch innerhalb des Außenrohres angeordnet ist und/oder dass das Außenrohr bzw. das Aggregat aus Innenrohr und Außenrohr konzentrisch innerhalb des äußeren Rohres angeordnet ist. Eine koaxiale Anordnung von Innenrohr und Außenrohr und/oder von Außenrohr und äußerem Rohr hat sich im Rahmen der Erfindung bewährt.

Gemäß empfohlener Ausführungsform der Erfindung beträgt das Verhältnis des Innendurchmessers d des Innenrohres zur radialen Weite rᵢ eines Leitungskanals zwischen Innenrohr und Außenrohr und/oder beträgt das Verhältnis des Innendurchmessers d des Innenrohres zur radialen Weite rₐ eines Außenleitungskanals zwischen Außenrohr und äußerem Rohr 3 bis 15, vorzugsweise 4 bis 14 und bevorzugte 4 bis 12. Es hat sich als vorteilhaft erwiesen, dass der Innendurchmesser d des Innenrohres 1 bis 10 mm, vorzugsweise 1,5 bis 8 mm und bevorzugt 2 bis 6 mm beträgt. Empfohlenermaßen beträgt die radiale Weite rᵢ eines Leitungskanals und/oder die radiale Weite rₐ eines Außenleitungskanals 0,5 bis 3,0 mm, vorzugsweise 0,6 bis 2,0 mm, bevorzugt 0,8 bis 1,5 mm und besonders bevorzugt 0,8 bis 1,2 mm.

Es liegt im Rahmen der Erfindung, dass der erfindungsgemäße Verbinder Bestandteil eines Kraftfahrzeuges ist und dass das Temperiermedium vorzugsweise erwärmte Kühlflüssigkeit bzw. erwärmtes Kühlwasser ist und/oder Kraftstoff bzw. zurückgeführter Kraftstoff ist. Nach einer Ausführungsform wird aus dem Kühlwasserkreislauf des Kraftfahrzeuges abgezweigtes erwärmtes Kühlwasser als Temperiermedium eingesetzt. Gemäß einer anderen Ausführungsvariante wird vom Motor des Kraftfahrzeuges zum Kraftstofftank zurückgeführter Kraftstoff als Temperiermedium verwendet.

Eine bevorzugte Ausführungsform der Erfindung ist dadurch gekennzeichnet, dass das Temperiermedium zunächst durch den zumindest einen Leitungskanal zwischen Innenrohr und Außenrohr in eine erste Richtung längs des Verbinders strömt, dass ein Umlenkbereich zur Umlenkung des Temperiermediums in den zumindest einen Außenleitungskanal zwischen Außenrohr und äußerem Rohr vorgesehen ist und dass das Temperiermedium durch den zumindest einen Außenleitungskanal in eine zu der ersten Richtung entgegengesetzten zweiten Richtung längs des Verbinders strömt. Zweckmäßigerweise wird das Temperiermedium somit zwischen Innenrohr und Außenrohr einerseits und zwischen Außenrohr und äußerem Rohr andererseits gleichsam im Gegenstrom geführt. Dabei strömt das Temperiermedium vorzugsweise durch eine Mehrzahl von durch die Stege getrennten Leitungskanälen sowie durch eine Mehrzahl von durch die Außenstege getrennten Außenleitungskanälen.

Es liegt im Rahmen der Erfindung, dass der erfindungsgemäße Verbinder zumindest einen Anschlussstutzen für die Zuführung des fluiden Temperiermediums aufweist und/oder zumindest einen Anschlussstutzen zur Abführung des fluiden Temperiermediums aufweist. Vorzugsweise ist der Verbinder sowohl mit einem Anschlussstutzen zur Zuführung des fluiden Temperiermediums als auch mit einem Anschlussstutzen zur Abführung des fluiden Temperiermediums ausgestattet. Zweckmäßigerweise ist ein solcher Anschlussstutzen als Steckerelement oder Muffenelement für den Anschluss eines passenden Muffenelementes bzw. Steckerelementes ausgeführt. Es empfiehlt sich, dass der Anschlussstutzen bzw. das die Anschlussstutzen senkrecht bzw. im Wesentlichen senkrecht zur Längsachse des Verbinders angeordnet sind. Wenn der Verbinder nach einer Ausführungsform - wie weiter unten noch erläutert - als abgewinkelter Verbinder ausgebildet ist, bezieht sich der Begriff Längsachse des Verbinders auf den Verbinderabschnitt an den der Anschlussstutzen bzw. an den die Anschlussstutzen angeschlossen ist/sind. Es liegt im Rahmen der Erfindung, dass der zumindest eine Anschlussstutzen zur Zuführung des fluiden Temperiermediums an die Leitungskanäle zwischen Innenrohr und Außenrohr angeschlossen ist und/oder dass der zumindest eine Anschlussstutzen zur Abführung des fluiden Temperiermediums an die Außenleitungskanäle zwischen Außenrohr und äußerem Rohr angeschlossen ist.

Zweckmäßigerweise besteht der erfindungsgemäße Verbinder und insbesondere das Aggregat aus äußerem Rohr, Außenrohr, Innenrohr, Stegen und Außenstegen aus thermoplastischem Kunststoff bzw. im Wesentlichen aus thermoplastischem Kunststoff. Nach einer Ausführungsform besteht der Verbinder bzw. das vorgenannte Aggregat aus einem Polyamid bzw. im Wesentlichen aus einem Polyamid. Bei dem Polyamid kann es sich insbesondere um Polyamid 12 handeln. Nach einer anderen Ausführungsform der Erfindung werden hochtemperaturfeste Kunststoffe für den erfindungsgemäßen Verbinder eingesetzt. - Es liegt im Rahmen der Erfindung, dass der erfindungsgemäße Verbinder bzw. insbesondere das Aggregat aus äußerem Rohr, Außenrohr, Innenrohr, Stegen und Außenstegen durch Spritzgießen hergestellt wird.

Es liegt weiterhin im Rahmen der Erfindung, dass das Aggregat aus Innenrohr, Außenrohr und äußerem Rohr von zumindest einem weiteren äußeren Rohr umgeben wird und dass Innenrohr, Außenrohr, äußeres Rohr und das zumindest eine weitere äußere Rohr konzentrisch zueinander bzw. koaxial angeordnet sind. Zweckmäßigerweise ist auch das weitere äußere Rohr über weitere äußere Stege mit dem äußeren Rohr verbunden. Es empfiehlt sich, dass auch durch den Zwischenraum bzw. durch die Kanäle zwischen äußerem Rohr und weiterem äußeren Rohr das fluide Temperiermedium strömt, und zwar vorzugsweise in eine Richtung, die entgegengesetzt zu der Strömungsrichtung ist, mit der das Temperiermedium durch die Außenleitungskanäle zwischen Außenrohr und äußerem Rohr strömt.

Der Erfindung liegt die Erkenntnis zugrunde, dass mit dem erfindungsgemäßen Verbinder eine überraschend effektive Temperierung eines fluiden Mediums, insbesondere einer Harnstofflösung möglich ist. Eine durch den erfindungsgemäßen Verbinder geführte Harnstofflösung kann auf einfache und problemlose Weise vor dem Einfrieren bzw. Auskristallisieren wirksam geschützt werden. Weiterhin kann der erfindungsgemäße Verbinder mit verhältnismäßig einfachen und wenig aufwendigen Mitteln hergestellt werden. Auf eine aufwendige elektrische Beheizung mit Heizdrähten oder dergleichen kann in vorteilhafter Weise verzichtet werden. Es kann auf die ohnehin vorhandenen bzw. ohnehin im Kraftfahrzeug vorhandenen Energieressourcen zurückgegriffen werden, ohne dass eine zusätzliche Energiezufuhr erforderlich ist. Ein erfindungsgemäßer Verbinder kann relativ kostengünstig verwirklicht bzw. hergestellt werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung eines erfindungsgemäßen Verbinders,
- Fig. 2: ganz schematisch die Strömungsrichtungen der fluiden Medien in dem erfindungsgemäßen Verbinder und
- Fig. 3: einen Schnitt A-A durch den Gegenstand nach Fig. 2.

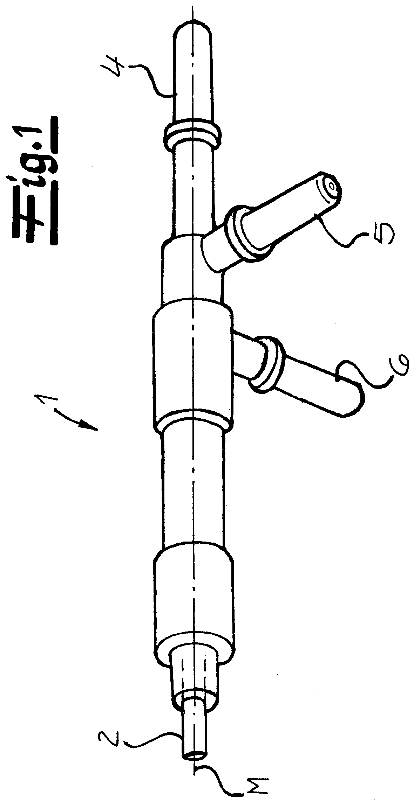

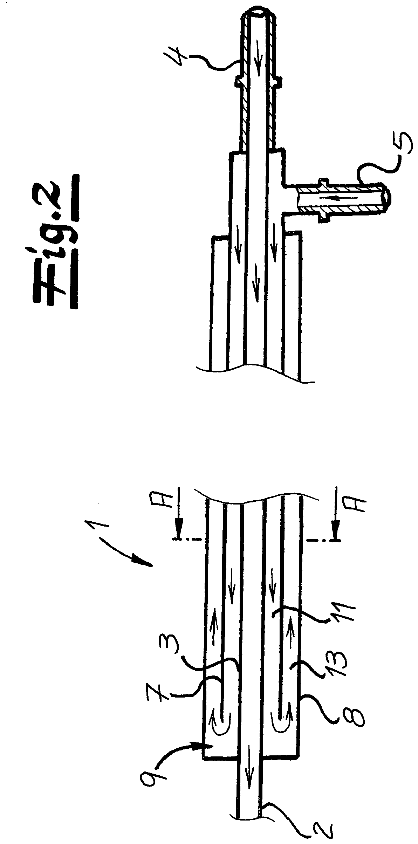

Die Figuren zeigen einen als Schnellverbinder ausgebildeten erfindungsgemäßen Verbinder 1 für die Verbindung einer eine zu temperierende Harnstofflösung führenden Rohrleitung 2 mit einer weiteren nicht dargestellten Komponente, beispielsweise mit einem weiteren Verbinder bzw. mit einer weiteren Rohrleitung. In den Fig. 1 und 2 ist erkennbar, dass die Rohrleitung 2 an der linken Stirnseite des Verbinders 1 angeschlossen ist. An dem anderen Stirnende bzw. an dem in den Fig. 1 und 2 rechten Stirnende weist der Verbinder 1 ein Steckerelement 4 zur Verbindung mit einem nicht dargestellten Muffenelement einer weiteren Komponente auf. Fernerhin ist der Verbinder 1 im Ausführungsbeispiel nach den Fig. 1 und 2 mit einem Anschlussstutzen 5 für die Zuführung eines fluiden Temperiermediums und mit einem Anschlussstutzen 6 für die Abführung des fluiden Temperiermediums ausgestattet. Zweckmäßigerweise und im Ausführungsbeispiel nach den Figuren sind die Anschlussstutzen 5, 6 als Steckerelemente analog zu dem Steckerelement 4 an dem einen Stirnende des Verbinders 1 ausgebildet.

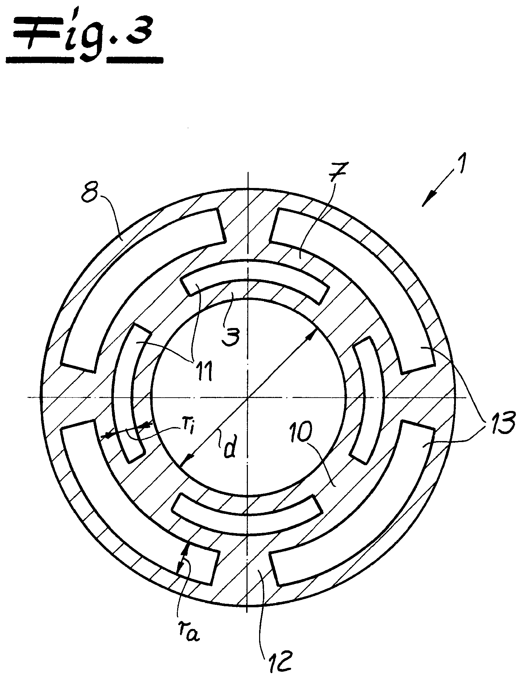

Der Verbinder 1 weist ein Innenrohr 3 für die Durchleitung der wässrigen Harnstofflösung auf. Diese Harnstofflösung wird einem nicht dargestellten SCR-Katalysator eines Kraftfahrzeuges zugeführt. Das Innenrohr 3 wird von einem Außenrohr 7 umgeben, so dass Innenrohr 3 und Außenrohr 7 konzentrisch bzw. koaxial zueinander angeordnet sind (siehe insbesondere Fig. 3). Das Außenrohr 7 bzw. das Aggregat aus Innenrohr 3 und Außenrohr 7 wird von einem äußeren Rohr 8 umgeben, so dass das Innenrohr 3, das Außenrohr 7 und das äußere Rohr 8 konzentrisch bzw. koaxial zueinander angeordnet sind.

In der Fig. 2 ist ganz schematisch die Strömung bzw. die Strömungsrichtung der Harnstofflösung einerseits und des fluiden Temperiermediums für die Erwärmung der Harnstofflösung andererseits durch Pfeile angedeutet worden. Der in den Figuren dargestellte Verbinder 1 ist bevorzugt und im Ausführungsbeispiel Bestandteil eines Kraftfahrzeuges und bei dem fluiden Temperiermedium handelt es sich nach einer Ausführungsform um aus dem Kühlwasserkreislauf des Kraftfahrzeuges abgezweigtes erwärmtes Kühlwasser.

Im Ausführungsbeispiel gemäß Fig. 2 strömt die Harnstofflösung von rechts nach links durch das Innenrohr 3. Das über den Anschlussstutzen 5 zugeführte fluide Temperiermedium strömt in die gleiche Richtung wie die Harnstofflösung durch den Zwischenraum zwischen Innenrohr 3 und Außenrohr 7 und zwar bis zu einem Umlenkbereich 9. Hier steht der Zwischenraum zwischen Innenrohr 3 und Außenrohr 7 in Fluidverbindung mit dem Zwischenraum zwischen dem Außenrohr 7 und dem äußeren Rohr 8. Das Temperiermedium wird im Umlenkbereich 9 in den Zwischenraum zwischen Außenrohr 7 und äußerem Rohr 8 umgelenkt und strömt im Ausführungsbeispiel nach Fig. 2 in die entgegengesetzte Richtung von links nach rechts. Aufgrund dieser Ausgestaltung wird eine sehr effektive Temperierung der Harnstofflösung im Innenrohr 3 erzielt. Das Temperiermedium strömt dann im Zwischenraum zwischen Außenrohr 7 und äußerem Rohr 8 zum Anschlussstutzen 6 und wird dort wieder abgeführt. Gemäß der in den Figuren dargestellten Ausführungsform ist der Anschlussstutzen 6 rechtwinklig zum Anschlussstutzen 5 angeordnet. Deshalb wird der Anschlussstutzen 6 in Fig. 2 von dem Verbinder 1 verdeckt und ist somit nicht erkennbar.

Die Fig. 3 zeigt einen Schnitt durch den Verbinder 1 gemäß Fig. 2. Es ist erkennbar, dass die Innenwand des Außenrohres 7 im Ausführungsbeispiel über vier Stege 10 mit der Außenwand des Innenrohres 3 verbunden ist. Die Stege 10 erstrecken sich vorzugsweise ohne Unterbrechung in Längsrichtung des Aggregates aus Innenrohr 3 und Außenrohr 7 bzw. parallel zur Längsmittelachse M des Verbinders 1. Auf diese Weise wird der Zwischenraum zwischen dem Innenrohr 3 und dem Außenrohr 7 im Ausführungsbeispiel in vier Leitungskanäle 11 für das fluide Temperiermedium unterteilt. In der Fig. 3 ist weiterhin erkennbar, dass die Innenwand des äußeren Rohres 8 im Ausführungsbeispiel über vier Außenstege 12 mit der Außenwand des Außenrohres 7 verbunden ist. Zweckmäßigerweise erstrecken sich die Außenstege 12 ohne Unterbrechung über die Länge des Aggregates aus Außenrohr 7 und äußerem Rohr 8 in Längsrichtung des Verbinders 1 bzw. parallel zur Längsmittelachse M des Verbinders 1. Somit wird der Zwischenraum zwischen dem Außenrohr 7 und dem äußeren Rohr 8 in vier Außenleitungskanäle 13 unterteilt. Vorzugsweise und im Ausführungsbeispiel sind die Stege 10 und die Außenstege 12 parallel zueinander angeordnet. Im Ausführungsbeispiel weisen die Stege 10 und die Außenstege 12 einen trapezförmigen Querschnitt auf. Dabei verjüngen sich die Trapeze vorzugsweise zur Mitte des Verbinders 1 bzw. zur Längsmittelachse M hin. Nach einer Ausführungsform und im Ausführungsbeispiel nach Fig. 3 sind die Stege 10 bezüglich des Umfangs des Außenrohres 7 versetzt zu den Außenstegen 12 angeordnet. Dabei ist im Ausführungsbeispiel ein Steg 10 im mittleren Bereich des benachbarten Außenleitungskanals 13 angeordnet und ein Außensteg 12 ist im mittleren Bereich des benachbarten Leitungskanals 11 angeordnet.

Insbesondere einer vergleichenden Betrachtung der Fig. 2 und 3 entnimmt man, dass nach bevorzugter Ausführungsform und im Ausführungsbeispiel sowohl das Innenrohr 3 als auch das Außenrohr 7 und auch das äußere Rohr 8 zylinderförmig mit kreisförmigem Querschnitt ausgebildet sind. Das Innenrohr 3 ist im Ausführungsbeispiel konzentrisch innerhalb des Außenrohres 7 angeordnet und das Aggregat aus Innenrohr 3 und Außenrohr 7 ist im Ausführungsbeispiel konzentrisch innerhalb des äußeren Rohres 8 angeordnet. - Der Innendurchmesser d des Innenrohres 3 beträgt vorzugsweise 2 bis 6 mm. Die radiale Weite rᵢ eines Leitungskanals 11 beträgt zweckmäßigerweise 0,8 bis 1,5 mm. Bevorzugt beträgt auch die radiale Weite rₐ eines Außenleitungskanals 13 0,8 bis 1,5 mm. Empfohlenermaßen beträgt die Wandstärke des Innenrohres 3 und die Wandstärke des Außenrohres 7 sowie die Wandstärke des äußeren Rohres 8 0,9 bis 2,2 mm.

Nach einer alternativen Ausführungsform der Erfindung kann das zu temperierende fluide Medium bzw. die Harnstofflösung auch durch die Leitungskanäle 11 zwischen Innenrohr 3 und Außenrohr 7 strömen. In diesem Fall strömt das fluide Temperiermedium zweckmäßigerweise zum einen durch das Innenrohr 3 und zum anderen durch die Außenleitungskanäle 13 zwischen Außenrohr 7 und äußerem Rohr 8.

## Patentansprüche

1. Verbinder (1), insbesondere Schnellverbinder für die Verbindung zumindest einer, ein zu temperierendes fluides Medium, insbesondere eine zu temperierende Harnstofflösung führenden Rohrleitung (2), wobei zumindest ein an zumindest einem Ende des Verbinders (1) angeordnetes Steckerelement (4) und/oder Muffenelement vorgesehen ist, wobei der Verbinder (1) ein Innenrohr (3) für das zu temperierende Medium oder für ein fluides Temperiermedium aufweist, wobei das Innenrohr (3) zumindest über einen Teil der Länge des Innenrohres (3) von einem Außenrohr (7) umgeben wird bzw. vollständig umgeben wird und wobei das Innenrohr (3) parallel bzw. im Wesentlichen parallel zum Außenrohr verläuft und wobei zwischen Innenrohr (3) und Außenrohr (7) Leitungskanäle (11) für das Temperiermedium oder für das zu temperierende Medium angeordnet sind,
wobei die Innenwand des Außenrohres (7) über eine Mehrzahl von Stegen (10) mit der Außenwand des Innenrohres (3) verbunden ist,
wobei die Stege (10) an die Innenwand des Außenrohres (7) und an die Außenwand des Innenrohres (3) einstückig angeformt sind,
wobei die Stege (10) über die Länge des Aggregates aus Innenrohr (3) und Außenrohr (7) verlaufen, wobei durch die Stege (10) der Raum zwischen Innenrohr (3) und Außenrohr (7) in eine Mehrzahl von Leitungskanälen (11) unterteilt wird, und wobei zumindest ein äußeres Rohr (8) vorgesehen ist, wobei die Innenwand des äußeren Rohres (8) über eine Mehrzahl von Außenstegen (12) mit der Außenwand des Außenrohres (7) verbunden ist, **dadurch gekennzeichnet, dass** die Stege (10) und/oder die Außenstege (12) einen trapezförmigen Querschnitt aufweisen.

2. Verbinder nach Anspruch 1, wobei sich die Stege (10) parallel zur Längsmittelachse M des Innenrohres (3) erstrecken.

3. Verbinder nach einem der Ansprüche 1 oder 2, wobei das Aggregat aus Innenrohr (3) und Außenrohr (7) in dem äußeren Rohr (8) angeordnet ist bzw. von dem äußeren Rohr (8) umgeben wird, insbesondere über den gesamten Umfang des Aggregates umgeben wird, wobei sich das äußere Rohr (8) parallel bzw. im Wesentlichen parallel zur Längsmittelachse M des Innenrohres (3) erstreckt und wobei zwischen dem Außenrohr (7) und dem äußeren Rohr (8) zumindest ein Außenleitungskanal (13) angeordnet ist.

4. Verbinder nach einem der Ansprüche 1 bis 3, wobei sich die Außenstege (12) bevorzugt parallel zur Längsmittelachse M des Innenrohres (3) erstrecken.

5. Verbinder nach einem der Ansprüche 1 bis 4, wobei die Wandstärke des Innenrohres (3) und/oder des Außenrohres (7) und/oder des äußeren Rohres (8) 0,6 bis 3 mm, vorzugsweise 0,8 bis 2,5 mm und bevorzugt 0,9 bis 2,2 mm beträgt.

6. Verbinder nach einem der Ansprüche 1 bis 5, wobei das Innenrohr (3) und/oder das Außenrohr (7) und/oder das äußere Rohr (8) zylinderförmig bzw. im Wesentlichen zylinderförmig ausgebildet ist/sind.

7. Verbinder nach einem der Ansprüche 1 bis 6, wobei das Innenrohr (3) konzentrisch innerhalb des Außenrohres (7) angeordnet ist und/oder wobei das Außenrohr (7) bzw. das Aggregat aus Innenrohr (3) und Außenrohr (7) konzentrisch innerhalb des äußeren Rohres (8) angeordnet ist.

8. Verbinder nach einem der Ansprüche 1 bis 7, wobei das Verhältnis des Innendurchmessers d des Innenrohres (3) zur radialen Weite rᵢ eines Leitungskanals (11) zwischen Innenrohr (3) und Außenrohr (7) und/oder zur radialen Weite rₐ eines Außenleitungskanals (13) zwischen Außenrohr (7) und äußerem Rohr (8) 3 bis 15, vorzugsweise 4 bis 14 und bevorzugt 4 bis 12 beträgt.

9. Verbinder nach einem der Ansprüche 1 bis 8, wobei der Innendurchmesser d des Innenrohres (3) 1 bis 10 mm, vorzugsweise 1,5 bis 8 mm und bevorzugt 2 bis 6 mm beträgt.

10. Verbinder nach einem der Ansprüche 1 bis 9, wobei die radiale Weite rᵢ eines Leitungskanals (11) und/oder die radiale Weite rₐ eines Außenleitungskanals (13) 0,5 bis 3,5 mm, vorzugsweise 0,6 bis 2,0 mm und bevorzugt 0,8 bis 1,5 mm beträgt.

11. Verbinder nach einem der Ansprüche 1 bis 10, wobei der Verbinder (1) Bestandteil eines Kraftfahrzeuges ist und wobei das Temperiermedium vorzugsweise erwärmte Kühlflüssigkeit bzw. erwärmtes Kühlwasser und/oder Kraftstoff bzw. zurückgeführter Kraftstoff ist.

12. Verbinder nach einem der Ansprüche 3 bis 11, wobei das Temperiermedium zunächst durch die Leitungskanäle (11) zwischen Innenrohr (3) und Außenrohr (7) in eine erste Richtung längs des Verbinders bzw. eines Verbinderabschnittes strömt, wobei ein Umlenkbereich zur Umlenkung des Temperiermediums in den zumindest einen Außenleitungskanal (13) zwischen Außenrohr (7) und äußerem Rohr (8) vorgesehen ist und wobei das Temperiermedium durch den zumindest einen Außenleitungskanal (13) in eine zu der ersten Richtung entgegensetzte zweite Richtung längs des Verbinders (1) bzw. eines Verbinderabschnittes strömt.

13. Verbinder nach einem der Ansprüche 1 bis 12, wobei der Verbinder (1) zumindest einen Anschlussstutzen (5) zur Zuführung des fluiden Temperiermediums und/oder zumindest einen Anschlussstutzen (6) zur Abführung des fluiden Temperiermediums aufweist.

14. Verbinder nach einem der Ansprüche 1 bis 13, wobei der Verbinder bzw. das Aggregat aus äußerem Rohr, Außenrohr, Innenrohr und Außenstegen sowie Stegen durch Spritzgießen hergestellt ist.

## Claims

1. A connector (1), in particular a quick connector for connecting at least one pipe (2) carrying a fluid medium to be tempered, in particular a urea solution to be tempered, wherein at least one plug element (4) and/or sleeve element is provided and arranged at least at one end of the connector (1), wherein the connector (1) has an inner pipe (3) for the medium to be tempered or for a fluid tempering medium, wherein the inner pipe (3) is enveloped at least over a portion of the length of the inner pipe (3) by an outer pipe (7) or is completely enveloped, and wherein the inner pipe (3) runs parallel or essentially parallel to the outer pipe, and wherein ducts (11) for the tempering medium or medium to be tempered are arranged between the inner pipe (3) and outer pipe (7),
wherein the inner wall of the outer pipe (7) is connected with the outer wall of the inner pipe (3) by a plurality of webs (10),
wherein the webs (10) are integrally molded to the inner wall of the outer pipe (7) and to the outer wall of the inner pipe (3),
wherein the webs (10) run over the length of the aggregate comprised of the inner pipe (3) and outer pipe (7), wherein the webs (10) divide the space between the inner pipe (3) and outer pipe (7) into a plurality of ducts (11),
and
wherein at least one exterior pipe (8) is provided, wherein the inner wall of the exterior pipe (8) is connected with the outer wall of the outer pipe (7), **characterized in that** the webs (10) and/or outer webs (12) have a trapezoidal cross section.

2. The connector according to claim 1, wherein the inner wall of the exterior pipe (8) is connected with the outer wall of the outer pipe (7) by a plurality of outer webs (12) .

3. The connector according to one of claims 1 or 2, wherein the aggregate comprised of an inner pipe (3) and outer pipe (7) is arranged in the exterior pipe (8) or is enveloped by the exterior pipe (8), in particular enveloped over the entire periphery of the aggregate, wherein the exterior pipe (8) extends parallel or essentially parallel to the central longitudinal axis M of the inner pipe (3), and wherein at least one outer duct (13) is arranged between the outer pipe (7) and exterior pipe (8).

4. The connector according to one of claims 1 to 3, wherein the outer webs (12) preferably extend parallel to the central longitudinal axis M of the inner pipe (3).

5. The connector according to one of claims 1 to 4, wherein the wall thickness of the inner pipe (3) and/or the outer pipe (7) and/or the exterior pipe (8) measures 0.6 to 3 mm, preferably 0.8 to 2.5 mm, and primarily 0.9 to 2.2 mm

6. The connector according to one of claims 1 to 5, wherein the inner pipe (3) and/or outer pipe (7) and/or exterior pipe (8) are cylindrical or essentially cylindrical in design.

7. The connector according to one of claims 1 to 6, wherein the inner pipe (3) is concentrically arranged inside of the outer pipe (7) and/or wherein the outer pipe (7) or the aggregate comprised of the inner pipe (3) and outer pipe (7) is concentrically arranged inside of the exterior pipe (8).

8. The connector according to one of claims 1 or 7, wherein the ratio of the inner diameter d of the inner pipe (3) to the radial width rᵢ of a duct (11) between the inner pipe (3) and outer pipe (7) and/or to the radial width rₐ of an outer duct (13) between the outer pipe (7) and exterior pipe (8) measures 3 to 15, preferably 4 to 14, and primarily 4 to 12.

9. The connector according to one of claims 1 to 8, wherein the inner diameter d of the inner pipe (3) measures 1 to 10 mm, preferably 1.5 to 8 mm, and primarily 2 to 6 mm.

10. The connector according to one of claims 1 to 9, wherein the radial width rᵢ of a duct (11) and/or the radial width Rₐ of an outer duct (13) measures 0.5 to 3.5 mm, preferably 0.6 to 2.0 mm, and primarily 0.8 to 1.5 mm.

11. The connector according to one of claims 1 to 10, wherein the connector (1) is a component of a motor vehicle, and wherein the tempering medium is preferably heated coolant or heated cooling water and/or fuel or returned fuel.

12. The connector according to one of claims 3 to 11, wherein the tempering medium initially flows through the ducts (11) between the inner pipe (3) and outer pipe (7) in a first direction along the connector or a connector section, wherein a deflection area for deflecting the tempering medium is provided in the at least one outer duct (13) between the outer pipe (7) and exterior pipe (8), and wherein the tempering medium flows through the at least one outer duct (13) in a second direction opposite the first direction along the connector (1) or a connector section.

13. The connector according to one of claims 1 to 12, wherein the connector (1) has at least one connecting piece (6) for supplying the fluid tempering medium and/or at least one connecting piece (6) for removing the fluid tempering medium.

14. The connector according to one of claims 1 to 13, wherein the connector or the aggregate comprised of the exterior pipe, outer pipe, inner pipe and outer webs as well as webs is manufactured via injection molding.

## Revendications

1. Raccord (1), notamment raccord rapide pour la liaison d'au moins une conduite (2) véhiculant un milieu liquide à thermoréguler, notamment une solution d'urée à thermoréguler, au moins un élément d'emboîtement (4) et/ou élément à manchon étant prévu au moins à l'extrémité du raccord (1), le raccord (1) comportant un tube intérieur (3) pour le milieu à thermoréguler ou pour un milieu de thermorégulation fluide, le tube intérieur (3) étant au moins sur une partie de la longueur du tube intérieur (3) entouré ou complètement entouré par un tube extérieur (7) et le tube intérieur (3) passant parallèlement ou pour l'essentiel parallèlement au tube extérieur et des conduits directeurs (11) étant disposés entre le tube intérieur (3) et le tube extérieur (7) pour le milieu de thermorégulation ou pour le milieu à thermoréguler,
la paroi intérieure du tube extérieur (7) étant reliée par une pluralité de nervures (10) à la paroi extérieure du tube intérieur (3),
les nervures (10) étant conformées en une seule pièce sur la paroi intérieure du tube extérieur (7) et sur la paroi extérieure du tube intérieur (3),
les nervures (10) passant sur la longueur de l'ensemble composé du tube intérieur (3) et du tube extérieur (7), l'espace situé entre le tube intérieur (3) et le tube extérieur (7) étant divisé en une pluralité de conduits directeurs (11) par les nervures (10),
et
au moins un tube externe (8) étant prévu, la paroi intérieure du tube externe (8) étant reliée par une pluralité de nervures extérieures (12) à la paroi extérieure du tube extérieur (7),
**caractérisé en ce que**
les nervures (10) et/ou les nervures extérieures (12) comportent une section trapézoïdale.

2. Raccord selon la revendication 1, les nervures (10) s'étendant parallèlement à l'axe central longitudinal M du tube intérieur (3).

3. Raccord selon l'une quelconque des revendications 1 ou 2, l'ensemble composé du tube intérieur (3) et du tube extérieur (7) étant disposé dans le tube externe (8) ou étant entouré par le tube externe (8), étant notamment entouré sur toute la périphérie de l'ensemble, le tube externe (8) s'étendant parallèlement ou pour l'essentiel parallèlement à l'axe central longitudinal M du tube intérieur (3) et au moins un conduit directeur extérieur (13) étant disposé entre le tube extérieur (7) et le tube externe (8).

4. Raccord selon l'une quelconque des revendications 1 à 3, les nervures extérieures (12) s'étendant de préférence parallèlement à l'axe central longitudinal M du tube intérieur (3).

5. Raccord selon l'une quelconque des revendications 1 à 4, l'épaisseur de paroi du tube intérieur (3) et/ou du tube extérieur (7) et/ou du tube externe (8) étant de 0,6 à 3 mm, de préférence de 0,8 à 2,5 mm et de préférence de 0,9 à 2,2 mm.

6. Raccord selon l'une quelconque des revendications 1 à 5, le tube intérieur (3) et/ou le tube extérieur (7) et/ou le tube externe (8) étant constitué (s) de forme cylindrique ou pour l'essentiel de forme cylindrique.

7. Raccord selon l'une quelconque des revendications 1 à 6, le tube intérieur (3) étant disposé de façon concentrique à l'intérieur du tube extérieur (7) et/ou le tube extérieur (7) ou l'ensemble composé du tube intérieur (3) et du tube extérieur (7) étant disposé de façon concentrique à l'intérieur du tube externe (8).

8. Raccord selon l'une quelconque des revendications 1 à 7, le rapport du diamètre intérieur d du tube intérieur (3) eu égard à la largeur radiale η d'un conduit directeur (11) entre le tube intérieur (3) et le tube extérieur (7) et/ou eu égard à la largeur radiale rₐ d'un conduit directeur extérieur (13) entre le tube extérieur (7) et le tube externe (8) étant de 3 à 15, de préférence de 4 à 14 et de préférence de 4 à 12.

9. Raccord selon l'une quelconque des revendications 1 à 8, le diamètre intérieur d du tube intérieur (3) étant de 1 à 10 mm, de préférence de 1,5 à 8 mm et de préférence de 2 à 6 mm.

10. Raccord selon l'une quelconque des revendications 1 à 9, la largeur radiale η d'un conduit directeur (11) et/ou la largeur radiale rₐ d'un conduit directeur extérieur (13) étant de 0,5 à 3,5 mm, de préférence de 0,6 à 2,0 mm et de préférence de 0,8 à 1,5 mm.

11. Raccord selon l'une quelconque des revendications 1 à 10, le raccord (1) étant partie constituante d'un véhicule automobile et le milieu de thermorégulation étant de préférence un liquide froid réchauffé ou de l'eau froide et/ou du carburant réchauffé ou du carburant reconduit.

12. Raccord selon l'une quelconque des revendications 3 à 11, le milieu de thermorégulation s'écoulant d'abord à travers les conduits directeurs (11) entre le tube intérieur (3) et le tube extérieur (7) dans une première direction le long du raccord ou d'une section de raccord, une zone de déviation étant prévue pour dévier le milieu de thermorégulation dans au moins un conduit directeur extérieur (13) entre le tube extérieur (7) et le tube externe (8) et le milieu de thermorégulation s'écoulant à travers au moins un conduit directeur extérieur (13) dans une deuxième direction opposée à la première direction le long du raccord (1) ou d'une section de raccord.

13. Raccord selon l'une quelconque des revendications 1 à 12, le raccord (1) comportant au moins un embout de raccordement (5) pour acheminer le milieu de thermorégulation fluide et/ou au moins un embout de raccordement (6) pour évacuer le milieu de thermorégulation fluide.

14. Raccord selon l'une quelconque des revendications 1 à 13, le raccord ou l'ensemble composé du tube externe, du tube extérieur, du tube intérieur et des nervures extérieures ainsi que de nervures étant fabriqué par moulage par injection.
